(19) Europäisches Patentamt

European Patent Office

Office européen des brevets

(11) **EP 1 686 355 A1**

(12) **EUROPÄISCHE PATENTANMELDUNG**

(43) Veröffentlichungstag:
**02.08.2006 Patentblatt 2006/31**

(51) Int Cl.:
*G01F 1/88* (2006.01)   *G01F 1/74* (2006.01)
*G01F 1/36* (2006.01)

(21) Anmeldenummer: **05405710.4**

(22) Anmeldetag: **21.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **31.01.2005 EP 05405047**

(71) Anmelder: **SULZER PUMPEN AG**
**8401 Winterthur (CH)**

(72) Erfinder: **Gülich, Johann**
**1844 Villeneuve/VD (CH)**

(74) Vertreter: **Sulzer Management AG**
**CS/Patente/0067,**
**Zürcherstrasse 12**
**8401 Winterthur (CH)**

(54) **Verfahren und Anordnung zur Durchflussüberwachung von Mehrphasengemischen**

(57) Ein Verfahren und eine Anordnung (10) zur Bestimmung des Messendurchflusses und des Gas/Flüssigkeits-Verhältnisses in einem Mehrphasengemisch während der Förderung umfasst in Förderrichtung (9) einen ersten Durchflussmesser, z.B eine Venturidüse (5.1), eine Vorrichtung (1) zur Erhöhung des Druckes, z.B. eine pumpe, oder Verminderung des Druckes, z.B. eine Turbine, und nach der genannten Vorrichtung einen zweiten Durchflussmesser, z.B. eine Venturidüse (5.2).

**Fig.1**

EP 1 686 355 A1

**Beschreibung**

Die Erfindung betrifft ein Verfahren und eine Anordnung zur Bestimmung des Massendurchflusses und des Gas/Flüssigkeits-Verhältnisses in einem Mehrphasengemisch während der Förderung, sowie eine Förderanlage für Mehrphasengemische zur Ausführung eines derartigen Verfahrens oder umfassend eine derartige Anordnung.

Bei der Förderung von Mehrphasengemischen, wie beispielsweise Rohöl, das neben Erdöl auch Erdgas und häufig auch Wasser enthält, stellt sich das Problem, das nicht nur der gesamte Massendurchfluss zu bestimmen ist, sondern auch das Gas/Flüssigkeits-Verhältnis im geförderten Mehrphasengemisch. Die Kenntnis des Massendurchflusses und des Gas/Flüssigkeits-Verhältnisses sind von grosser praktischer Bedeutung, beispielsweise für die Rechnungsstellung, für die Steuerung der Mehrphasenpumpe und für die Prozessteuerung, insbesondere für die Einstellung der Förderrate und die Qualitätsüberwachung.

Aus WO 90/13859 ist eine Vorrichtung zum mischen und Messen eines mehrphasigen Fluids bekannt, das einen Behälter aufweist, dem die gasförmigen und flüssigen Anteile zugeführt werden und ein perforiertes Sammelrohr, um die gasförmigen und flüssigen Anteile aus dem Behälter abzuleiten und zu mischen. Im Anschluss an das Sammelrohr sind eine Venturidüse vorgesehen, um den Massendurchfluss zu bestimmen, und ein Densiometer, um die Dichte des mehrphasigen Fluids zu messen. Die aus WO 90/13859 bekannte Vorrichtung hat den Nachteil, dass ein Densiometer verwendet wird, das z.B. mit Gammastrahlen arbeitet und hohe Kosten sowie einen entsprechenden Wartungsaufwand erfordert.

In der Veröffentlichung WO 95/26494 ist eine Vorrichtung und ein Verfahren zum Mischen, Messen und Fördern eines Mehrphasengemisches offenbart, welche einen Buffertank zur Trennung der flüssigen und gasförmigen Anteile verwenden. Der Massendurchfluss des gasförmigen Anteils wird bei diesem Verfahren separat erfasst, bevor die flüssigen und gasförmigen Anteile in einem Sammelrohr wieder zusammengeführt und weiterbefördert werden. Weiter kann aus dem Druck des gasförmigen Anteils, dem Druck im Sammelrohr und der Höhe des Flüssigkeitsspiegels im Buffertank und einer Venturimessung der gesamte Massendurchfluss berechnet werden.

Die aus dem Stand der Technik bekannten Verfahren und Vorrichtungen zur Bestimmung des Massendurchflusses und des Gas/Flüssigkeits-Verhältnisses in einem Mehrphasengemisch haben den Nachteil, dass sie aufwändig sind und je nach Ausführung einen relativ grossen Separatorbehälter und/oder ein kosten- und wartungsintensives Densiometer benötigen. Zudem ist die Genauigkeit der herkömmlichen Verfahren beschränkt.

Aufgabe der Erfindung ist es, ein Verfahren und eine Anordnung zur Bestimmung des Massendurchflusses und des Gas/Flüssigkeits-Verhältnisses in einem Mehrphasengemisch während der Förderung, sowie eine Förderanlage für Mehrphasengemische zur Ausführung eines derartigen Verfahrens und/oder umfassend eine derartige Anordnung zur Verfügung zu stellen, welche die Nachteile aus dem Stand der Technik vermeiden.

Diese Aufgabe wird erfindungsgemäss durch das in Anspruch 1 definierte Verfahren, und die in Anspruch 7 definierte Anordnung gelöst, sowie durch die in Anspruch 12 definierte Förderanlage.

Im erfindungsgemässen Verfahren zur Bestimmung des Massendurchflusses und des Gas/Flüssigkeits-Verhältnisses in einem Mehrphasengemisch während der Förderung wird der Druck des Mehrphasengemisches zwischen zwei Messstellen erhöht oder vermindert und an den beiden Messstellen jeweils eine mit dem Volumendurchfluss, insbesondere mit dem gesamten Volumendurchfluss, oder mit der Durchflussgeschwindigkeit, insbesondere mit der Durchflussgeschwindigkeit des Mehrphasengemisches, korrelierte Messgrösse erfasst. Sodann wird auf Grund der erfassten Messgrössen das Gas/Flüssigkeits-Verhältnis und/oder der Volumendurchfluss der Flüssigphase und der Gasphase und/oder der Massendurchfluss der Flüssigphase und der Gasphase bestimmt. Zur Erhöhung oder Verminderung des Druckes kann beispielsweise eine Pumpe, insbesondere eine Pumpe für Mehrphasengemische, oder eine Turbine, insbesondere eine Entspannungsturbine, verwendet werden.

In einer bevorzugten Ausführungsform wird zur Erfassung der mit dem Volumendurchfluss korrelierten Messgrössen jeweils eine Venturidüse und/oder eine Messblende und/oder ein Volumendurchflussmesser verwendet. Unter der Bezeichnung "Messblende" wird im folgenden jegliche Art von Vorrichtung mit geeichtem Druckverlust verstanden, wie beispielsweise Düsen, Blenden oder Sonden. Vorzugsweise wird als mit dem Volumendurchfluss korrelierte Messgrössen jeweils ein Druckunterschied in einer Venturidüse und/oder ein Druckabfall über eine Messblende und/oder eine Durchflussgeschwindigkeit und/oder der Volumendurchfluss selbst erfasst.

Vorzugsweise wird das Gas/Flüssigkeits-Verhältnis ohne Benützung eines Separators oder Trennbehälters bestimmt. Die Erfassung der Messwerte kann beispielsweise in Rohrleitungen erfolgen. Vorzugsweise wird der Durchlassquerschnitt im Bereich der Messstellen nicht mehr als 50 %, insbesondere nicht mehr als 20 % oder 10% variiert.

In einer bevorzugten Ausführungsvariante werden die erfindungsgemäss bestimmten Volumendurchflusswerte der Flüssigphase und der Gasphase beziehungsweise die bestimmten Massendurchflusswerte der Flüssigphase und der Gasphase zur Regelung und/oder Überwachung der Pumpe oder Turbine verwendet werden.

Weiter umfasst die Erfindung eine Anordnung zur Bestimmung des Massendurchflusses und des Gas/Flüssigkeits-Verhältnisses in einem Mehrphasengemisch während der Förderung, in welcher in Förderrichtung nacheinander eine Messvorrichtung zur Erfassung einer mit dem Volumendurchfluss, insbesondere mit dem gesamten Volumendurchfluss, oder mit der Durchflussgeschwindigkeit, insbesondere mit der Durchflussgeschwindigkeit des Mehrphasengemisches, korrelierten Messgrösse, eine Vorrichtung zur Erhöhung oder Verminderung des Druckes und eine weitere Messvorrichtung zur Erfassung einer mit dem Volumendurchfluss, insbesondere mit dem gesamten Volumendurchfluss, oder mit der Durchflussgeschwindigkeit, insbesondere mit der Durchflussgeschwindigkeit des Mehrphasengemisches, korrelierten Messgrösse vorgesehen sind. Die Vorrichtung zur Erhöhung oder Verminderung des Druckes kann beispielsweise als Pumpe, insbesondere als Pumpe für Mehrphasengemische, oder als Turbine, insbesondere als Entspannungsturbine, ausgeführt sein.

In einer bevorzugten Ausführungsform umfasst die Anordnung zusätzlich eine Recheneinheit, die mit den Messvorrichtungen verbunden ist, zur Bestimmung, vorzugsweise automatischen Bestimmung, des Gas/Flüssigkeits-Verhältnisses und/oder des Volumendurchflusses der Flüssigphase und der Gasphase und/oder des Massendurchflusses der Flüssigphase und der Gasphase. Vorzugsweise ist die Recheneinheit 4 mit der Steuerung der Pumpe oder Turbine verbunden oder in die Steuerung derselben integriert. Zweckmässigerweise werden die derart bestimmten Volumendurchflusswerte beziehungsweise Massendurchflusswerte der Flüssigphase und der Gasphase zur Regelung und/oder Überwachung der Pumpe oder Turbine verwendet.

In einer weiteren bevorzugten Ausführungsform sind die Messvorrichtungen zur Erfassung der mit dem Volumendurchfluss korrelierten Messgrössen jeweils als Venturidüse und/oder als Messblende und/oder als Volumendurchflussmesser ausgeführt.

Vorzugsweise sind die Messvorrichtungen zur Erfassung der mit dem Volumendurchfluss korrelierten Messgrössen in Rohrleitungen angeordnet oder die Messvorrichtungen derart ausgebildet sind, dass der Durchlassquerschnitt im Bereich der Messvorrichtungen nicht mehr als 50 %, insbesondere nicht mehr als 20 % oder 10 % variiert.

Weiter umfasst die Erfindung eine Förderanlage für Mehrphasengemische zur Ausführung eines oder mehrerer der oben genannten Verfahren und/oder enthaltend eine oder mehrere der oben genannten Anordnungen.

Das erfindungsgemässe Verfahren zur Bestimmung des Massendurchflusses und des Gas/Flüssigkeits-Verhältnisses in einem Mehrphasengemisch während der Förderung hat den Vorteil, dass dasselbe verglichen mit herkömmlichen Verfahren einfach und kostengünstig ausführbar ist. Aus dem Gas/Flüssigkeits-Verhältnis und den erfassten Messgrössen kann in einfacher Weise der Volumen- und Massendurchfluss der flüssigen und der gasförmigen Anteile des Mehrphasengemisches bestimmt werden. Die erfindungsgemässe Anordnung kann in vorteilhafter Weise aus Standardbauteilen zusammengestellt werden, die im Betrieb wenig zusätzlichen Wartungsaufwand erfordern. Die Anordnung ist auch deshalb kostengünstig, weil ein Separatorbehälter zur Trennung der Flüssig- und Gasphase und/oder ein kosten- und wartungsintensives Densiometer entfällt und die Messvorrichtungen beispielsweise in Rohrleitungen eingebaut werden können.

Weitere vorteilhafte Ausführungsformen gehen aus den abhängigen Ansprüchen und der Zeichnung hervor.

Im Folgenden wird die Erfindung an Hand des Ausführungsbeispiels und an Hand der Zeichnung näher erläutert. Es zeigen:

Fig. 1    eine schematische Darstellung eines Ausführungsbeispiels einer Anordnung gemäss vorliegender Erfindung,

Fig. 2    eine Ausführungsvariante mit Recheneinheit zu dem in Fig. 1 gezeigten Ausführungsbeispiel,

Fig. 3    einen Aufbau zum Eichen einer Anordnung gemäss vorliegender Erfindung, und

Fig. 4    Beispiel einer Messvorrichtung in Form einer Venturidüse aus dem in Fig. 1 gezeigten Ausführungsbeispiel.

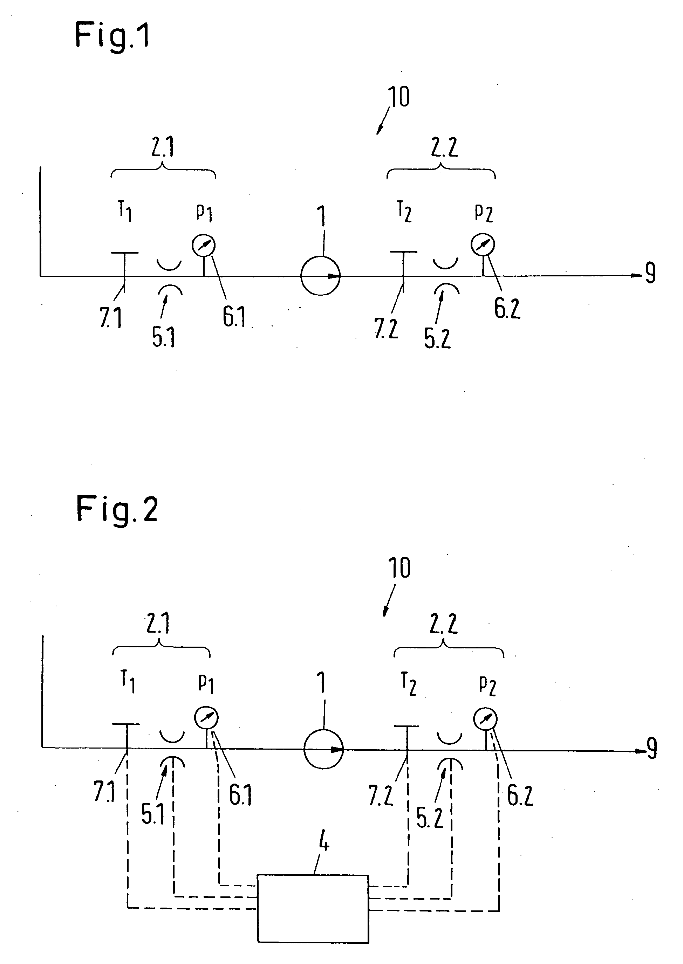

Figur 1 zeigt eine schematische Darstellung eines Ausführungsbeispiels einer Anordnung 10 gemäss vorliegender Erfindung. In dieser Anordnung sind in Förderrichtung 9 nacheinander an einer ersten Messstelle 2.1 eine Messvorrichtung 5.1 zur Erfassung einer mit dem Volumendurchfluss korrelierten Messgrösse, eine Vorrichtung 1 zur Erhöhung oder Verminderung des Druckes und an einer zweiten Messstelle 2.2 eine weitere Messvorrichtung 5.2 zur Erfassung einer mit dem Volumendurchfluss korrelierten Messgrösse vorgesehen. Im Ausführungsbeispiel ist die Vorrichtung 1 zur Erhöhung oder Verminderung des Druckes als Pumpe, beispielsweise als Pumpe für Mehrphasengemische, oder als Turbine, beispielsweise als Entspannungsturbine, ausgeführt. Zur Druckverminderung sind auch andere Teile einer Förderanlage geeignet, beispielsweise eine Rohrleitungsstrecke und insbesondere eine Steigleitung, solange sich das Verhältnis der an den beiden Messstellen 2.1 und 2.2 vorhandenen Druckwerte genügend vom Wert 1 unterscheidet, beispielsweise grösser als 1.4 oder kleiner als 0.7 und mit Vorteil grösser als 2 oder kleiner als 0.5 ist.

Die Messvorrichtungen (5.1, 5.2) zur Erfassung der mit dem Volumendurchfluss korrelierten Messgrössen sind im Ausführungsbeispiel als Venturidüsen ausgeführt. In den Venturidüsen wird in bekannter Weise der Druckunterschied (auch "Wirkdruck" genannt) zwischen dem Zulaufdruck und dem Druck im engsten Querschnitt erfasst. Der Druckunterschied ist abhängig von der Durchflussgeschwindigkeit und damit vom Volumendurchfluss des Mehrphasengemisches. Selbstverständlich können auch andere Messvorrichtungen verwendet werden beziehungsweise andere mit dem Volumendurchfluss korrelierte Messgrössen erfasst werden. Beispielsweise können mittels einer oder mehrerer Messblenden Druckabfälle und/oder mittels einem oder mehreren Aufnehmern die Durchflussgeschwindigkeiten oder Volumendurchflussraten erfasst werden.

In einer bevorzugten Ausführungsvariante sind die Messstellen 2.1, 2.2 zusätzlich mit je einem Druckaufnehmer 6.1, 6.2 und einem Temperaturaufnehmer 7.1, 7.2 ausgestattet. In einer weiteren bevorzugten Ausführungsvariante ist die erste Venturidüse unmittelbar vor dem Ansaugstutzen der Mehrphasenpumpe angeordnet, beispielsweise innerhalb eines Abstandes L, wobei L/D < 3, sodass das Verhalten der Pumpe von der durch die Venturidüse bewirkten Homogensierung des Flusses profitieren kann.

Zur Bestimmung des Gas/Flüssigkeits-Verhältnisses und des Massendurchflusses der Flüssigphase und der Gasphase wird davon ausgegangen, dass der Massendurchfluss an den beiden Messstellen gleich gross ist. In Folge der Druckerhöhung oder -Verminderung zwischen den Messstellen ist der Druck an den Messstellen jedoch unterschiedlich. Damit ist auch der Volumendurchfluss der Gasphase an den beiden Messstellen unterschiedlich. Aus Messungen des Volumendurchflusses und/oder einer damit korrelierten Messgrösse an den beiden Messstellen kann eine Bestimmungsgleichung für das Gas/Flüssigkeits-Verhältnis ermittelt werden, aus der sich das Gas/Flüssigkeits-Verhältnis bestimmen lässt. Mit Hilfe des Gas/Flüssigkeits-Verhältnisses kann anschliessend der Volumendurchfluss der Flüssigphase und der Gasphase und/oder der Massendurchfluss der Flüssigphase und der Gasphase bestimmt werden.

In analoger Weise kann aus Messungen des Volumendurchflusses und/oder einer damit korrelierten Messgrösse an den beiden Messstellen eine Bestimmungsgleichung für eine andere Transportgrösse, beispielsweise für den Volumendurchfluss der Flüssigphase oder den Volumendurchfluss der Gasphase oder den Massendurchfluss der Flüssigphase oder den Massendurchfluss der Gasphase ermittelt und aus der Bestimmungsgleichung die betreffende Transportgrösse bestimmt werden. Mit Hilfe der derart bestimmten Transportgrösse können dann die übrigen Transportgrössen berechnet werden.

Die Bestimmung des Gas/Flüssigkeits-Verhältnisses hängt insbesondere davon ab, welche mit dem Volumendurchfluss korrelierte Messgrössen an den beiden Messstellen 2.1, 2.2 erfasst werden. Das Vorgehen bei der Bestimmung des Gas/Flüssigkeits-Verhältnisses wird im Folgenden an Hand des Ausführungsbeispiels erläutert. Im Ausführungsbeispiel wird der Druck des Mehrphasengemisches zwischen den beiden Messstellen 2.1, 2.2 mittels einer Mehrphasenpumpe erhöht und an beiden Messstellen jeweils der Druckunterschied $\Delta p_1$, $\Delta p_2$ zwischen dem Zulaufdruck und dem Druck im engsten Querschnitt einer Venturidüse 5.1, 5.2 erfasst. Zusätzlich wird an beiden Messstellen jeweils der Druck $p_1$, $p_2$ und die Temperatur $T_1$, $T_2$ des Mehrphasengemisches erfasst. Die beschriebene Vorgehensweise eignet sich in analoger Weise auch für die Bestimmung des Gas/Flüssigkeits-Verhältnisses, wenn an Stelle der Venturidüsen andere Messvorrichtungen zur Erfassung der mit dem Volumendurchfluss korrelierten Messgrössen verwendet werden.

In dem in Fig. 1 gezeigten Ausführungsbeispiel ist der Massendurchfluss $\dot{m}_1$, $\dot{m}_2$ an beiden Messstellen 2.1, 2.2 gleich gross ist. D.h.

$$\dot{m}_1 = \dot{m}_2 \qquad\qquad (1)$$

Der Massendurchfluss einer Venturidüse ergibt sich z.B. aus folgender Formel:

$$\dot{m} = A\,\alpha\,\varepsilon\,f_{FP}\sqrt{2\,\rho_{mix}\,\Delta p} \qquad\qquad (2)$$

Eingesetzt in Formel (1) erhält man damit:

$$A_1\,\alpha_1\,\varepsilon_1\,f_{FP1}\sqrt{2\,\rho_{mix,1}\,\Delta p_1} = A_2\,\alpha_2\,\varepsilon_2\,f_{FP2}\sqrt{2\,\rho_{mix,2}\,\Delta p_2} \qquad (3)$$

mit

$A_1$, $A_2$ = Querschnitt der Venturidüse
$\alpha_1$, $\alpha_2$ = berechnete Durchflusszahl der Venturidüse
$\varepsilon_1$, $\varepsilon_2$ = Expansionskoeffizient der Venturidüse; kann gleich 1.0 gesetzt werden, insbesondere wenn der Durchflussfaktor, wie nachstehend beschrieben, durch Eichung bestimmt wird, und

$f_{FP1}, f_{FP2}$ = Durchflussfaktor der Venturidüse (Eichfunktion)
$\rho_{mix,1}, \rho_{mix,2}$ = Dichte des Mehrphasengemisches
$\Delta p_1, \Delta p_2$ = gemessener Druckunterschied der Venturidüse

Die Dichte des Mehrphasengemisches beträgt:

$$\rho_{mix,1} = \frac{\rho_1'Q_1' + \rho_1''Q_1''}{Q_1' + Q_1''} = \frac{\rho_1' + \rho_1''GLR_1}{1 + GLR_1} \qquad (4a)$$

und

$$\rho_{mix,2} = \frac{\rho_1'Q_1' + \rho_1''Q_1''}{Q_2' + Q_2''} = \frac{\rho_1' + \rho_1''GLR_1}{\frac{\rho_1'}{\rho_2'}\left(1 + GLR_2\right)} \qquad (4b)$$

mit

$\rho_1', \rho_2'$ = Flüssigdichte
$Q_1', Q_2'$ = Volumendurchfluss der Flüssigphase
$\rho_1'', \rho_2''$ = Gasdichte
$Q_1'', Q_2''$ = Volumendurchfluss der Gasphase
$GLR_1$ $GLR_2$ = Gas/Flüssigkeits-Verhältnis

Man beachte, dass $\rho_2'Q_2' = \rho_1'Q_1'$ (Flüssig masse ist konstant)
und $\rho_2''Q_2'' = \rho_1''Q_1''$ (Gasmasse ist konstant)

Aus den Gleichungen (3), (4a) und (4b) erhält man folgende Gleichung für $GLR_1$:

$$\frac{\rho_1' + GLR_1\rho_1''}{1 + GLR_1} - \frac{\rho_1' + \rho_1''GLR_1}{\frac{\rho_1'}{\rho_2'} + GLR_1\frac{\rho_1 T_2}{\rho_2 T_1}} \left(\frac{A_2\,\alpha_2\,\varepsilon_2\,f_{FP2}}{A_1\,\alpha_1\,\varepsilon_1\,f_{FP1}}\right)^2 \frac{\Delta p_2}{\Delta p_1} = 0 \qquad (5)$$

Die Gasdichte $\rho_1''$ kann aus der Beziehung $\rho_1'' = \dfrac{p_1}{Z\,R_1\,T_1}$ (6) bestimmt werden, mit

$Z$ = realer Gasfaktor

$R_1$ = universelle Gaskonstante/M
und

$M$ = Molekulargewicht.

Die Flüssigdichte $\rho1' = f(p_1, T_1)$ in Funktion des Druckes und der Temperatur ist aus Materialtabellen bekannt.
Damit kann die Gleichung (5) für $GLR_1$ gelöst werden, beispielsweise analytisch durch Lösung der entspre-

chenden quadratischen Gleichung für $GLR_1$ oder iterativ, z.B. mit einem der üblichen Tabellenkalkulationsprogramme. Aus dem derart bestimmten Gas/Flüssigkeits-Verhältnis $GLR_1$ können die übrigen Transportgrössen, wie Volumendurchfluss $Q_1$' der Flüssigphase, Volumendurchfluss $Q_1$" der Gasphase, Massendurchfluss $\dot{m}_1$' der Flüssigphase und Massendurchfluss $m_1$" der Gasphase, berechnet werden. Der folgende Berechnungsgang ist lediglich als Beispiel zu betrachten: Durch Einsetzen von $GLR_1$ in Gleichung (4a) kann $\rho_{mix,1}$ bestimmt werden. Durch Einsetzen von $\rho_{mix,1}$ in

Gleichung (2) erhält man den gesamten Massendurchfluss $m_1$ und aus der Beziehung $Q_1 = \dfrac{\dot{m}_1}{\rho_{mix,1}}$ den gesamten

Volumendurchfluss $Q_1$. Der Volumendurchfluss $Q_1$' der Flüssigphase berechnet sich nunmehr aus $Q_1' = \dfrac{GLR_1 \, Q_1}{(GLR_1 + 1)}$

der Volumendurchfluss $Q_1$" der Gasphase aus $Q_1" = GLR_1 \, Q_1'$, der Massendurchfluss $\dot{m}_1$' der Flüssigphase aus $\dot{m}_1' = \rho_1' Q_1'$ und der Massendurchfluss $\dot{m}_1$" der Gasphase aus $\dot{m}_1" = \rho_1" \, Q_1"$.

Die Gleichungen (4a) bis (6) gelten nur für den Fall, dass die Verdampfung und Kondensation im Mehrphasengemisch und die Lösung von Gasen im Mehrphasengemisch vernachlässigbar sind. Falls die Effekte der Verdampfung/Kondensation oder der Lösung von Gasen im Mehrphasengemisch nicht vernachlässigbar sind, kann für die Bestimmung des Gas/Flüssigkeits-Verhältnisses in der selben Weise vorgegangen werden, wie im oben beschriebenen Ausführungsbeispiel, wobei der gasförmige Volumendurchfluss $Q$" nun aus einem nicht kondensierenden Gasanteil $Q_g$ und einem kondensierenden Gasanteil $Q_v$ besteht, der gesättigt ist, d.h. $Q" = Q_g + Q_v$.

Für die Bestimmung des Gas/Flüssigkeits-Verhältnisses gemäss dem oben beschriebenen Ausführungsbeispiel muss die Flüssigdichte $\rho_1$' bekannt sein. Falls das Mehrphasengemisch einen variablen Wasseranteil (im Englischen als "water cut" bezeichnet) enthält, was beispielsweise bei der Förderung von Rohöl häufig der Fall ist, so kann gemäss einer weiteren Ausführungsvariante der Wasseranteil $W_c$ in der Flüssigphase mittels eines separaten Messaufnehmers erfasst werden. Die Flüssigdichte $\rho_1$' ergibt sich dann aus:

$$\rho_1' = \left(1 - w_c\right)\rho_{Öl} + w_c\,\rho_{Wasser} \qquad (7)$$

In einer weiteren bevorzugten Ausführungsvariante sind die Messaufnehmer der Venturidüsen 5.1, 5.2, wie in Fig. 2 gezeigt, mit einer Recheneinheit 4 verbunden, um die an den beiden Messstellen 2.1., 2.2 erfassten Druckunterschiede der Venturidüsen auszuwerten. Die Bestimmung des Gas/Flüssigkeits-Verhältnisses kann in diesem Fall mittels der Recheneinheit 4 erfolgen. Aus dem Gas/Flüssigkeits-Verhältnis können, wie oben erwähnt, weitere Transportgrössen, wie Volumendurchfluss $Q_1$' der Flüssigphase, Volumendurchfluss $Q_1$" der Gasphase, Massendurchfluss $m_1$' der Flüssigphase und Massendurchfluss $m_1$" der Gasphase, berechnet werden. Damit ergibt sich die Möglichkeit, das Gas/Flüssigkeits-Verhältnis und fallweise weitere Transportgrössen eines Mehrphasengemisches automatisch und/oder kontinuierlich zu überwachen. Mit Vorteil sind die Messstellen 2.1, 2.2 zusätzlich mit je einem Druckaufnehmer 6.1, 6.2 und einem Temperaturaufnehmer 7.1, 7.2 ausgestattet, die ebenfalls mit der Recheneinheit 4 verbunden sind. Diese Anordnung gestattet eine automatische und/oder kontinuierliche Bestimmung des Gas/Flüssigkeits-Verhältnisses sowie fallweise weiterer daraus abgeleiteter Transportgrössen mit einer gegenüber herkömmlichen Verfahren, wie demjenigen aus WO 95/26494, verbesserten Genauigkeit.

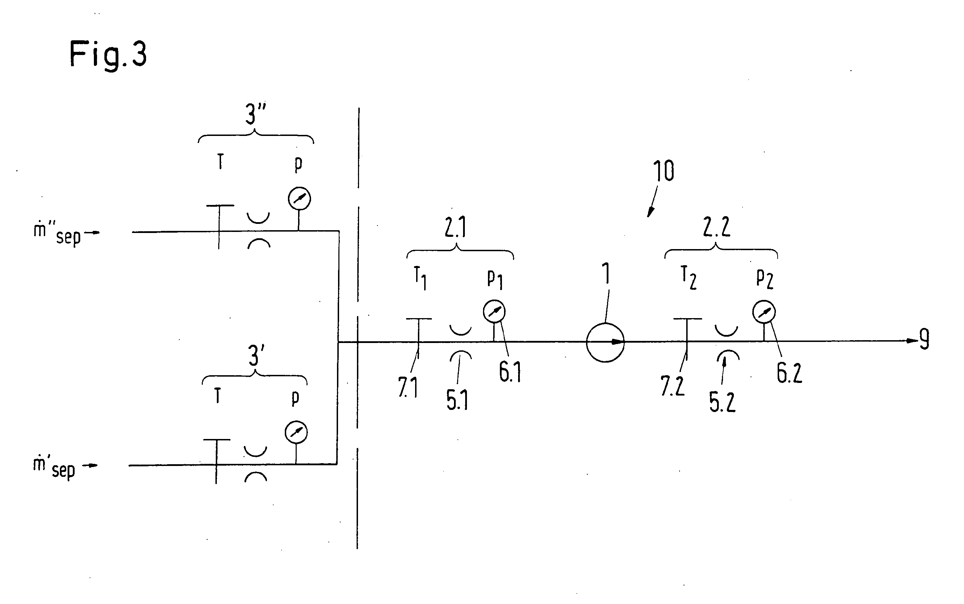

Da das oben beschriebene Verfahren zur Bestimmung des Massendurchflusses und des Gas/Flüssigkeits-Verhältnisses auch zur Rechnungsstellung eingesetzt werden kann, kommt der Eichung eine besondere Bedeutung zu. Fig. 3 zeigt einen Aufbau zum Eichen einer Anordnung gemäss vorliegender Erfindung. In diesem Aufbau werden gleichzeitig ein flüssiger Massenstrom $m'_{sep}$ und ein gasförmiger Massenstrom $m"_{sep}$ in die zu eichende Anordnung 10 eingespeist, die beispielsweise entsprechend dem oben beschriebenen Ausführungsbeispiel ausgeführt sein kann. Der flüssige und der gasförmige Massenstrom werden jeweils über eine eigene Zuleitung und eine eigene Messstelle 3', 3" zur Erfassung des Volumen- und/oder Massendurchflusses zugeführt, sodass der Durchfluss der Flüssig- und der Gasphase separat erfasst werden kann. Der separate Volumen- und/oder Massendurchfluss kann beispielsweise mittels einer Venturidüse oder Messblende erfasst werden. Vorzugsweise sind an den Messstellen-3', 3" zur separaten Erfassung des Durchflusses der Flüssig-und der Gasphase jeweils zusätzlich ein Druck- und ein Temperaturaufnehmer vorgesehen.

Die Eichung der Anordnung 10 zur Bestimmung des Massendurchflusses und des Gas/Flüssigkeits-Verhältnisses erfolgt mit Vorteil auf dem Prüfstand im Rahmen der Abnahmeprüfung der Pumpe 1, wobei zweckmässigerweise die später im Betrieb eingesetzten Venturidüsen 5.1, 5.2 eingebaut werden. Vorzugsweise wird auch dieselbe Leitungsanordnung verwendet wie im späteren Betrieb, da die Leitungsanordnung im Betrieb häufig nicht ideal ist und die für Venturidüsen verlangten Standardlängen für die gerade verlaufenden Zu- und Ableitung häufig nicht eingehalten werden können. Derartige Abweichungen von der idealen Geometrie werden somit in den Durchflussfaktoren $f_{FP1}$, $f_{FP2}$ der Venturidüsen 5.1, 5.2 der Anordnung 10 berücksichtigt.

Während der Eichung wird der Massendurchfluss $\dot{m}'_{sep}$, $\dot{m}''_{sep}$ der separat zugeführten Flüssigphase und Gasphase gemessen sowie der resultierende Massendurchfluss $m_1$, $\dot{m}_2$ in den Venturidüsen 5.1, 5.2 der zu eichenden Anordnung 10. Das Verhältnis zwischen dem mittels der Venturidüsen 5.1, 5.2 bestimmten Massendurchfluss $m_1$, $\dot{m}_2$ und den Messungen der separat zugeführten Flüssigphase und Gasphase wird in den Durchflussfaktoren $f_{FP1}$, $f_{FP2}$ berücksichtigt:

$$f_{FP1} = \frac{\dot{m}_1}{\dot{m}'_{sep} + \dot{m}''_{sep}} \qquad f_{FP2} = \frac{\dot{m}_2}{\dot{m}'_{sep} + \dot{m}''_{sep}} \qquad (8)$$

In Gleichung (5) wird nur das Verhältnis $f_{FP1}/f_{FP2}$ benötigt, womit die Korrektur und die damit verbundene Unsicherheit wesentlich reduziert werden.

$$F_{FP} = \frac{f_{FP1}}{f_{FP2}} \qquad (9)$$

Die Faktoren $f_{FP1}$, $f_{FP2}$ und $F_{FP}$ werden für verschiedene Durchflusswerte und verschiedene Zusammensetzungen des Mehrphasengemisches bestimmt und als Funktion der Durchflusswerte und Zusammensetzung, beispielsweise als Funktion $f_{FP}$ oder $F_{FP} = f(G, GVF, \rho^*)$, aufgezeichnet, um entsprechende Abhängigkeiten festzustellen. Dabei bedeutet:

$$G = \dot{m}_{mix}/A = \text{Massengeschwindigkeit}$$

$$GVF = \frac{GLR}{1 + GLR} = \text{Anteil des Gasdurchflusses} \qquad (10)$$

und $\rho^* = p'/p''$ = Verhältnis von Flüssigdichte und Gasdichte

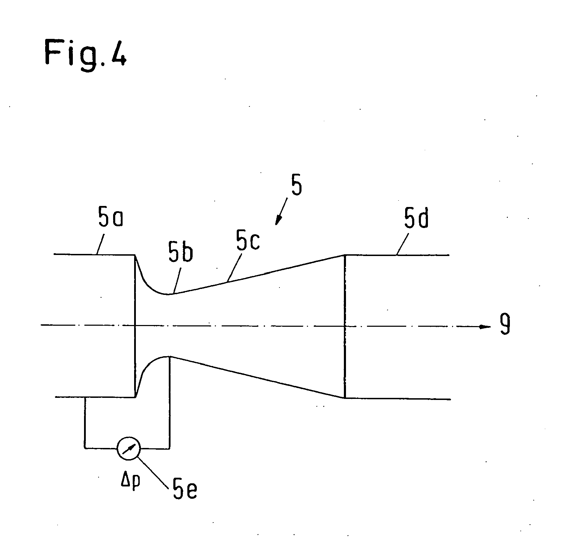

Fig. 4 zeigt ein Beispiel einer Messvorrichtung in Form einer Venturidüse aus dem oben beschriebenen Ausführungsbeispiel. Vorzugsweise wird zur Erfassung der mit dem Volumendurchfluss korrelierten Messgrösse eine Venturidüse nach ISO 5167 verwendet. In dem in Fig. 4 gezeigten Beispiel umfasst die Venturidüse 5 in Strömungsrichtung 9 nacheinander eine gerade Zuleitung 5a mit konstantem Querschnitt, eine engste Stelle 5b mit reduziertem Querschnitt und einen trichterförmig sich erweiternden Diffusor 5c, der in eine gerade Ableitung 5d mit konstantem Querschnitt übergeht. Zusätzlich ist ein Messaufnehmer 5e vorgesehen, um den Druckunterschied zwischen dem Zulaufdruck in der Zuleitung 5a und dem Druck an der engsten Stelle 5b zu erfassen.

Das erfindungsgemässe Verfahren zur Bestimmung des Massendurchflusses und des Gas/Flüssigkeits-Verhältnisses in einem Mehrphasengemisch zeichnet sich dadurch aus, dass es verglichen mit herkömmlichen Verfahren, wie beispielsweise demjenigen aus WO 95/26494, einfacher und kostengünstiger ausführbar ist. Zudem sind die derart bestimmten Werte des Gas/Flüssigkeits-Verhältnisses genauer als die mit dem genannten herkömmlichen Verfahren bestimmten Werte. Die verwendeten Teile der erfindungsgemässen Anordnung sind robust und bedürfen, abgesehen von den Messaufnehmern der Messvorrichtungen, keiner zusätzlichen Wartung. Bei Bedarf können aus dem derart bestimmten Gas/Flüssigkeits-Verhältnis ohne zusätzlichen Messaufwand weitere Durchflusswerte, insbesondere der Durchfluss der Flüssig- und der Gasphase, berechnet werden.

**Patentansprüche**

1. Verfahren zur Bestimmung des Massendurchflusses und des Gas/Flüssigkeits-Verhältnisses in einem Mehrphasengemisch während der Förderung, **dadurch gekennzeichnet,**
   **dass** der Druck des Mehrphasengemisches zwischen zwei Messstellen (2.1, 2.2) erhöht oder vermindert wird,
   **dass** an den beiden Messstellen (2.1, 2.2) jeweils eine mit dem Volumendurchfluss, insbesondere mit dem gesamten Volumendurchfluss, korrelierte Messgrösse erfasst wird, und
   **dass** auf Grund der erfassten Messgrössen das Gas/Flüssigkeits-Verhältnis und/oder der Volumendurchfluss $Q_1'$ der Flüssigphase und $Q_1''$ der Gasphase und/oder der Massendurchfluss $m_1'$ der Flüssigphase und $m_1''$ der Gasphase bestimmt wird.

2. Verfahren nach Anspruch 1, wobei zur Erhöhung oder Verminderung des Druckes eine Pumpe (1), insbesondere eine Pumpe für Mehrphasengemische, oder eine Turbine (1), insbesondere eine Entspannungsturbine, verwendet wird.

3. Verfahren nach einem der Ansprüche 1 oder 2, wobei zur Erfassung der mit dem Volumendurchfluss korrelierten Messgrössen jeweils eine Venturidüse und/oder eine Messblende und/oder ein Volumendurchflussmesser verwendet wird.

4. Verfahren nach einem der Ansprüche 1 bis 3, wobei als mit dem Volumendurchfluss korrelierte Messgrössen jeweils ein Druckunterschied in einer Venturidüse und/oder ein Druckabfall über eine Messblende und/oder eine Durchflussgeschwindigkeit und/oder der Volumendurchfluss selbst erfasst werden.

5. Verfahren nach einem der Ansprüche 1 bis 4, wobei das Gas/Flüssigkeits-Verhältnis ohne Benützung eines Separators oder Trennbehälters bestimmt wird und/oder wobei die Erfassung der Messwerte in Rohrleitungen erfolgt oder der Durchlassquerschnitt im Bereich der Messstellen (2.1, 2.2) nicht mehr als 50 %, insbesondere nicht mehr als 20 % variiert.

6. Verfahren nach einem der Ansprüche 2 bis 5, wobei die bestimmten Volumendurchflusswerte $Q_1'$ der Flüssigphase und $Q_1''$ der Gasphase beziehungsweise die bestimmten Massendurchflusswerte $m_1'$ der Flüssigphase und $m_1''$ der Gasphase zur Regelung und/oder Überwachung der Pumpe oder Turbine verwendet werden.

7. Anordnung (10) zur Bestimmung des Massendurchflusses und des Gas/Flüssigkeits-Verhältnisses in einem Mehrphasengemisch während der Förderung, **dadurch gekennzeichnet, dass** in Förderrichtung (9) nacheinander eine Messvorrichtung (5.1) zur Erfassung einer mit dem Volumendurchfluss, insbesondere mit dem gesamten Volumendurchfluss, korrelierten Messgrösse, eine Vorrichtung (1) zur Erhöhung oder Verminderung des Druckes und eine weitere Messvorrichtung (5.2) zur Erfassung einer mit dem Volumendurchfluss, insbesondere mit dem gesamten Volumendurchfluss, korrelierten Messgrösse vorgesehen sind.

8. Anordnung nach Anspruch 7 umfassend zusätzlich eine Recheneinheit (4), die mit den Messvorrichtungen (5.1, 5.2) verbunden ist, zur Bestimmung, insbesondere automatischen Bestimmung, des Gas/Flüssigkeits-Verhältnisses und/oder des Volumendurchflusses $Q_1'$ der Flüssigphase und $Q_1''$ der Gasphase und/oder des Massendurchflusses $m_1'$ der Flüssigphase und $m_1''$ der Gasphase.

9. Anordnung nach einem der Ansprüche 7 oder 8, wobei die Vorrichtung (1) zur Erhöhung oder Verminderung des Druckes als Pumpe, insbesondere als Pumpe für Mehrphasengemische, oder als Turbine, insbesondere als Entspannungsturbine, ausgeführt ist.

10. Anordnung nach einem der Ansprüche 7 bis 9, wobei die Messvorrichtungen (5.1, 5.2) zur Erfassung der mit dem Volumendurchfluss korrelierten Messgrössen jeweils als Venturidüse und/oder als Messblende und/oder als Volumendurchflussmesser ausgeführt sind.

11. Anordnung nach einem der Ansprüche 7 bis 10, wobei die Messvorrichtungen (5.1, 5.2) zur Erfassung der mit dem Volumendurchfluss korrelierten Messgrössen in Rohrleitungen angeordnet sind oder die Messvorrichtungen derart ausgebildet sind, dass der Durchlassquerschnitt im Bereich der Messvorrichtungen nicht mehr als 50 %, insbesondere nicht mehr als 20 % variiert.

12. Förderanlage für Mehrphasengemische zur Ausführung eines Verfahrens nach einem der Ansprüche 1 bis 6 und/oder umfassend eine Anordnung (10) nach einem der Ansprüche 7 bis 11.

## Fig.1

## Fig.2

# Fig.3

$\dot{m}''_{sep} \rightarrow$

$3''$

T    p

$\dot{m}'_{sep} \rightarrow$

$3'$

T    p

$2.1$

$T_1$    $p_1$

$7.1$    $5.1$    $6.1$

$10$

$1$

$2.2$

$T_2$    $p_2$

$7.2$    $5.2$    $6.2$

$9$

## Fig.4

**Europäisches Patentamt**

# EUROPÄISCHER RECHERCHENBERICHT

Nummer der Anmeldung

EP 05 40 5710

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 168 624 A (PICHON) 25. September 1979 (1979-09-25) * Zusammenfassung; Abbildung 2 * * Spalte 1 - Spalte 3 * * Spalte 4, Zeile 19 - Zeile 20 * * Spalte 6 - Spalte 7 * ----- | 1-12 | INV. G01F1/88 G01F1/74 G01F1/36 |
| X | US 4 050 896 A (RAFFEL ET AL) 27. September 1977 (1977-09-27) * Zusammenfassung; Abbildung 1 * * Spalte 2 - Spalte 4 * ----- | 1-12 | |
| X | US 5 099 697 A (AGAR) 31. März 1992 (1992-03-31) * Zusammenfassung; Abbildung 1 * * Spalte 1 - Spalte 4 * * Spalte 6 * ----- | 1,3-5,7, 8,10-12 | |
| X | US 6 502 467 B1 (FINCKE) 7. Januar 2003 (2003-01-07) * Zusammenfassung; Abbildungen 1,2 * * Spalte 1 - Spalte 4 * * Spalte 6 * ----- | 1,3-5,7, 8,10-12 | RECHERCHIERTE SACHGEBIETE (IPC) G01F |
| X | US 6 345 536 B1 (MORRISON ET AL) 12. Februar 2002 (2002-02-12) * Zusammenfassung; Abbildung 1 * * Spalte 2, Zeile 38 - Spalte 4, Zeile 16 * * Spalte 5, Zeile 31 - Zeile 52 * * Spalte 6, Zeile 44 - Zeile 49 * ----- | 1,3-5,7, 8,10-12 | |

Der vorliegende Recherchenbericht wurde für alle Patentansprüche erstellt

| Recherchenort | Abschlußdatum der Recherche | Prüfer |
|---|---|---|
| Den Haag | 2. Mai 2006 | Barthélemy, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 05 40 5710

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 4168624 | A | 25-09-1979 | DE | 2812715 A1 | 05-10-1978 |
| | | | FR | 2386021 A1 | 27-10-1978 |
| | | | JP | 54001094 A | 06-01-1979 |
| | | | NO | 781089 A | 03-10-1978 |
| US 4050896 | A | 27-09-1977 | DE | 2543302 A1 | 07-04-1977 |
| | | | FR | 2325680 A1 | 22-04-1977 |
| | | | GB | 1559867 A | 30-01-1980 |
| US 5099697 | A | 31-03-1992 | AT | 136644 T | 15-04-1996 |
| | | | AU | 7446591 A | 30-10-1991 |
| | | | CN | 1055423 A | 16-10-1991 |
| | | | DE | 69118686 D1 | 15-05-1996 |
| | | | DE | 69118686 T2 | 12-09-1996 |
| | | | EP | 0523068 A1 | 20-01-1993 |
| | | | WO | 9115738 A1 | 17-10-1991 |
| | | | HK | 1006037 A1 | 05-02-1999 |
| | | | IL | 97414 A | 04-04-1993 |
| | | | JP | 7035980 B | 19-04-1995 |
| | | | JP | 5507350 T | 21-10-1993 |
| US 6502467 | B1 | 07-01-2003 | AU | 9509098 A | 12-04-1999 |
| | | | WO | 9915862 A1 | 01-04-1999 |
| | | | US | 6332111 B1 | 18-12-2001 |
| US 6345536 | B1 | 12-02-2002 | AU | 6036999 A | 27-03-2000 |
| | | | CA | 2343021 A1 | 16-03-2000 |
| | | | NO | 20011222 A | 09-05-2001 |
| | | | WO | 0014484 A2 | 16-03-2000 |
| | | | US | 6422092 B1 | 23-07-2002 |

EPO FORM P0461

Für nähere Einzelheiten zu diesem Anhang : siehe Amtsblatt des Europäischen Patentamts, Nr.12/82